# EUROPÄISCHE PATENTSCHRIFT

(11) **EP 3 301 323 B1**
(45) Veröffentlichungstag und Bekanntmachung des Hinweises auf die Patenterteilung: **28.08.2019**
(21) Anmeldenummer: 17192566.2
(22) Anmeldetag: 22.09.2017
(51) Int. Cl.: F16H 1/32

(54) **ZYKLOIDGETRIEBE**
CYCLOID GEAR
TRAIN D'ENGRENAGE DE TYPE ROUE CYCLOÏDALE

(30) Priorität: 29.09.2016 DE 102016118428
(43) Veröffentlichungstag der Anmeldung: 04.04.2018
(73) Patentinhaber: Schunk GmbH & Co. KG Spann- und Greiftechnik, 74348 Lauffen am Neckar (DE)
(72) Erfinder: Schäfer, Marco, 74199 Untergruppenbach (DE); Becker, Ralf, 71672 Marbach (DE)
(74) Vertreter: DREISS Patentanwälte PartG mbB

(56) Entgegenhaltungen:
- WO-A1-94/23223
- WO-A1-2014/154340
- US-A- 4 898 065
- US-A1- 2013 157 795

## Beschreibung

Die Erfindung betrifft ein Zykloidgetriebe mit einer ersten Getriebestufe, die eine erste und eine zweite jeweils Kurvenabschnitte aufweisende Kurvenscheibe aufweist, welche durch eine Mehrzahl von Mitnehmerbolzen bewegungsgekoppelt sind, und mit einer um eine Getriebeachse drehbar antreibbaren Antriebswelle und wenigstens einer koaxial zur Getriebeachse angeordneten Abtriebswelle.

Zykloidgetriebe sind aus dem Stand der Technik bekannt. Zykloidgetriebe sind Exzentergetriebe. Bei derartigen Exzentergetrieben übertragen Kurvenscheiben ein Drehmoment wälzend. Ein Exzenter treibt dazu eine Kurvenscheibe mit zykloidischen Kurvenabschnitten der Anzahl n an, die sich in einem Bolzenring mit n+1 Bolzen abwälzt. Eine Zykloide ist eine Bahn, die ein Kreispunkt beim Abrollen eines Kreises auf einer Leitkurve, bspw. auf einer Geraden beschreibt.

Beim Abwälzen der Kurvenscheibe über die Bolzen des Bolzenrings bewegt sich bei jeder Umdrehung der Antriebswelle die Kurvenscheibe um einen Kurvenabschnitt weiter. Auf diese Weise entstehen kleinere Drehzahlen entgegen der Antriebsrotation.

Ein einstufiges Zykloidgetriebe ist bspw. aus der WO 2014/154340 A1 bekannt. Die US 2013/0157795 A1 zeigt ein zweistufiges Exzentergetriebe, bei dem die Exzenterscheiben an ihrem Umfang Zahnflanken aufweisen, die mit Zahnflanken eines Hohlrades zusammenwirken. WO 94/23223 A1 offenbart, nach Auffassung der Prüfungsabteilung des europäischen Patentamtes ein Exzentergetriebe, welches unter den Wortlaut des Oberbegriffs des Anspruchs 1 fällt. Ein weiteres zweistufiges Exzentergetriebe ist bekannt aus der US 4 898 065 A.

Die aus dem Stand der Technik bekannten Zykloidgetriebe haben dabei den Nachteil, dass sie im Grad ihrer Untersetzung und im Grad der Miniaturisierung begrenzt sind. Dabei ist der Einsatz im Bereich der Feinwerktechnik bislang, trotz wesentlicher Vorteile von Zykloidgetrieben, nicht möglich.

Insbesondere führt der Versuch, mit den bekannten Zykloidgetrieben hohe Untersetzungen zu erreichen zu einer feinen Teilung der Kurvenscheiben, d.h. zu sehr kleinen Kurvenabschnitten und zu sehr kleinen Durchmessern der Bolzen des Bolzenrings. Dies führt zwangsläufig zu einer geringeren Festigkeit und einem damit einhergehenden, geringeren übertragbaren Drehmoment. Ferner sind derartig kleine Kurvenabschnitte und Bolzen schwierig zu fertigen und entsprechend teuer.

Die Erfindung stellt sich daher die Aufgabe, ein Zykloidgetriebe bereitzustellen, mit dem große Untersetzungen bei großen übertragbaren Drehmomenten übertragbar sind, wobei das Zykloidgetriebe kostengünstig herstellbar sein soll.

Diese Aufgabe wird durch ein Zykloidgetriebe mit den Merkmalen des Anspruchs 1 gelöst. Das Zykloidgetriebe zeichnet sich dadurch aus, dass die Antriebswelle mit den Kurvenscheiben der ersten Getriebestufe exzentrisch bewegungsgekoppelt ist und dass eine zweite Getriebestufe vorgesehen ist, die eine erste und eine zweite jeweils Kurvenabschnitte aufweisende Kurvenscheibe aufweist, welche durch eine Mehrzahl von Mitnehmerbolzen bewegungsgekoppelt sind, wobei ein mit der zweiten Getriebestufe exzentrisch bewegungsgekoppelter erster Bolzenring vorgesehen ist, in dem die Kurvenscheiben der ersten Getriebestufe abwälzen und wobei die Kurvenscheiben der zweiten Getriebestufe mit der Abtriebswelle exzentrisch bewegungsgekoppelt sind. Mit einem derartigen Zykloidgetriebe kann folglich eine radiale Hintereinanderschaltung der beiden Getriebestufen erreicht werden, so dass ein Zykloidgetriebe mit einer insgesamt größeren Untersetzung bereitgestellt werden kann, mit dem auch große Drehmomente übertragbar sind. Um eine insgesamt noch größere Übersetzung zu erreichen, ist es auch denkbar mehr als zwei Getriebestufen radial hintereinanderzuschalten.

Ferner ist vorgesehen, dass eine Zwischenwelle vorgesehen ist, auf der die Kurvenscheiben der zweiten Getriebestufe exzentrisch gelagert sind.

Ferner ist erfindungsgemäß vorgesehen, dass die erste Getriebestufe den ersten Bolzenring umfasst, also dass der erste Bolzenring Bestandteil der ersten Getriebestufe ist, und dass der erste Bolzenring an der Zwischenwelle angeordnet ist. Dabei ist denkbar, dass der erste Bolzenring Bolzenabschnitte aufweist, die mit der Zwischenwelle einstückig verbunden ist.

Ferner ist vorgesehen, dass die Zwischenwelle koaxial zur Getriebeachse radial zwischen der ersten Getriebestufe und der zweiten Getriebestufe angeordnet ist.

Um eine besonders kompakte Bauweise des Zykloidgetriebes zu ermöglichen ist es vorteilhaft, wenn die Zwischenwelle die erste Getriebestufe zumindest abschnittsweise umgreift. Somit kann ein zweistufiges Zykloidgetriebe mit einer radialen Hintereinanderschaltung von zwei Getriebestufen in einer besonders kompakten Bauweise realisiert werden.

Um eine Einleitung einer Drehbewegung in das Zykloidgetriebe zu ermöglichen ist es besonders vorteilhaft, wenn die Kurvenscheiben der ersten Getriebestufe exzentrisch auf der Antriebswelle gelagert sind.

Um Schmutz und andere Verunreinigungen von dem Zykloidgetriebe fernzuhalten ist es besonders vorteilhaft, wenn das Zykloidgetriebe ein Getriebegehäuse aufweist.

In einer besonders vorteilhaften Weiterbildung des Zykloidgetriebes ist vorgesehen, dass die Mitnehmerbolzen der ersten Getriebestufe mit dem Getriebegehäuse verbunden sind. Vorzugsweise sind die Mitnehmerbolzen der ersten Getriebestufe mit dem Getriebegehäuse drehfest verbunden, insbesondere verschraubt.

Besonders bevorzugt ist es ferner, wenn ein zweiter Bolzenring vorgesehen ist, in dem die Kurvenscheiben der zweiten Getriebestufe abwälzen.

In einer weiteren besonders vorteilhaften Ausgestaltung des Zykloidgetriebes ist vorgesehen, dass die Mitnehmerbolzen der zweiten Getriebestufe mit der Abtriebswelle verbunden sind. Vorzugsweise sind die Mitnehmerbolzen der zweiten Getriebestufe mit der Abtriebswelle drehfest verbunden, insbesondere verschraubt. Somit kann eine Taumelbewegung der Kurvenscheiben der zweiten Getriebestufe im Bolzenring der zweiten Getriebestufe in eine Drehbewegung der Abtriebswelle umgesetzt werden.

Weiterhin ist es vorteilhaft, wenn die Abtriebswelle koaxial zur Getriebeachse gelagert ist.

In einer weiteren besonders vorteilhaften Ausgestaltung des Zykloidgetriebes ist vorgesehen, dass die Antriebswelle als Hohlwelle ausgebildet ist. Mit einer derartigen hohlen Antriebswelle kann eine Art Mittendurchlass im Zykloidgetriebe derart realisiert werden, dass Kabel und andere Bauteile mittig durch das Zykloidgetriebe hindurchgeführt werden können.

Als besonders vorteilhaft hat es sich dabei erwiesen, dass die Antriebswelle das Zykloidgetriebe axial insbesondere vollständig durchsetzt.

Vorteilhafterweise ist die Abtriebswelle radial außerhalb der Antriebswelle angeordnet.

Weitere Einzelheiten und vorteilhafte Weiterbildungen der Erfindung sind der nachfolgenden Beschreibung zu entnehmen, anhand derer eine Ausführungsform der Erfindung näher beschrieben und erläutert ist.

Es zeigen:
- Figur 1: einen Schnitt durch ein erfindungsgemäßes Zykloidgetriebe;
- Figur 2: einen ersten vergrößerten Ausschnitt des Schnitts gemäß Figur 1;
- Figur 3: eine Schrägansicht von Teilen des Zykloidgetriebes gemäß der Figuren 1 und 2 in einer Darstellung ohne Getriebegehäuse; und
- Figur 4: eine Vorderansicht auf die Schrägansicht gemäß Figur 3.

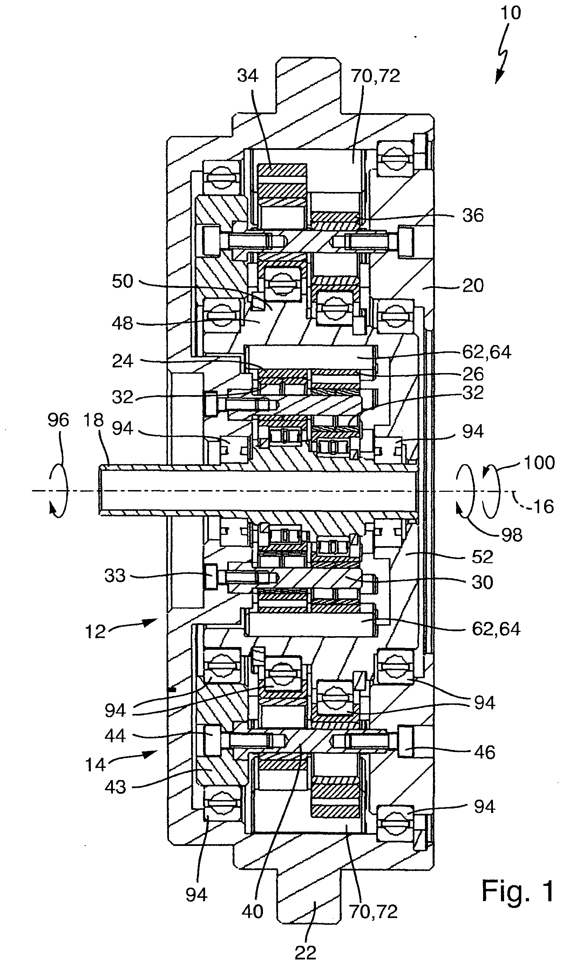

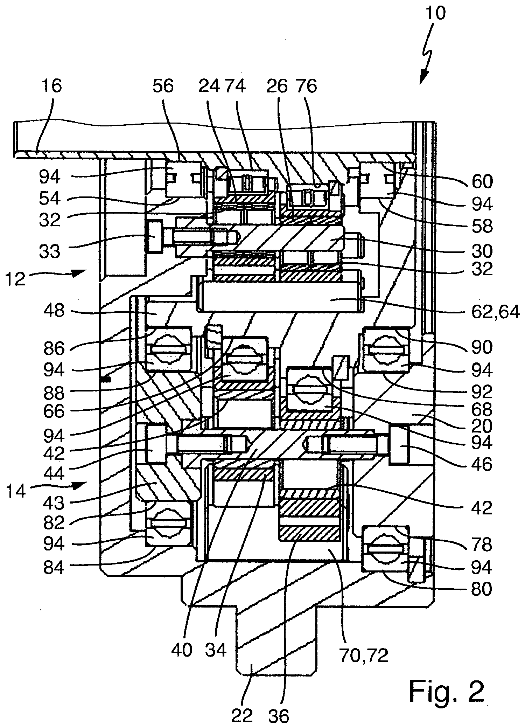

In den Figuren 1 bis 4 ist insgesamt ein erfindungsgemäßes Zykloidgetriebe 10 gezeigt.

Das Zykloidgetriebe 10 weist eine erste Getriebestufe 12 und eine zweite Getriebestufe 14 auf. Das Zykloidgetriebe 10 weist ferner eine um eine Getriebeachse 16 drehbar antreibbare und koaxial zur Getriebeachse 16 angeordnete Antriebswelle 18 und eine koaxial zur Getriebeachse 16 angeordnete Abtriebswelle 20 auf. Die Antriebswelle 18 ist als Hohlwelle ausgebildet und durchsetzt das Zykloidgetriebe 10 in axialer Richtung, d.h. entlang der Getriebeachse 16 nahezu vollständig. Mit einer derartigen hohlen Antriebswelle 18 kann eine Art Mittendurchlass im Zykloidgetriebe 10 derart realisiert werden, dass Kabel und andere Bauteile mittig durch das Zykloidgetriebe 10 hindurchgeführt werden können. Die zweite Getriebestufe 14 ist radial, d.h. senkrecht zur Getriebeachse 16, außerhalb der ersten Getriebestufe 12 angeordnet.

Um Schmutz und andere Verunreinigungen von dem Zykloidgetriebe 10 fernzuhalten weist das Zykloidgetriebe 10 ein Getriebegehäuse 22 auf.

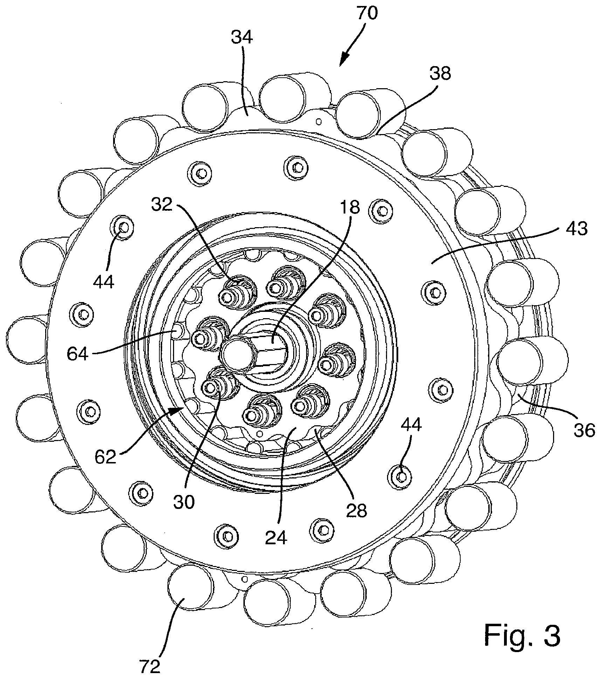

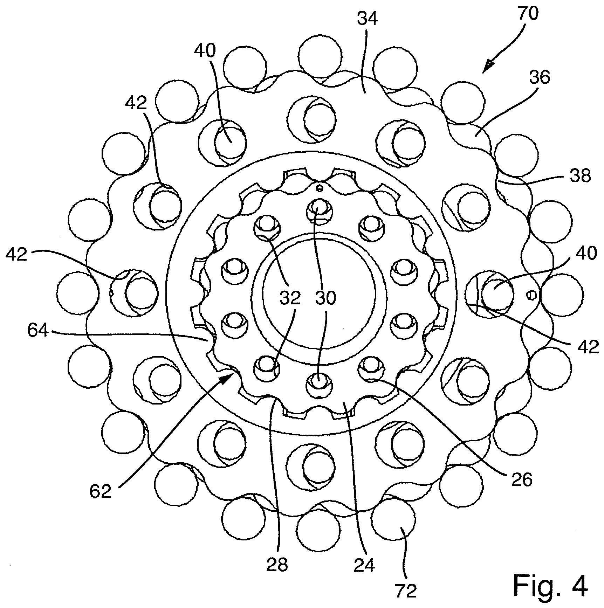

Die erste Getriebestufe 12 weist eine erste Kurvenscheibe 24 und eine zweite Kurvenscheibe 26 auf, die insbesondere in den Figuren 3 und 4 deutlich zu erkennen sind. Die Kurvenscheiben 24, 26 weisen zykloidische Kurvenabschnitte 28 der Anzahl m auf und sind an ihrem jeweiligen Außenumfang derart identisch ausgebildet, dass die Kurvenabschnitte 28 der ersten und der zweiten Kurvenscheibe 24, 26 einander entsprechen. Die erste und die zweite Kurvenscheibe 24, 26 der ersten Getriebestufe 12 sind mit der Antriebswelle 18 der ersten Getriebestufe 12 exzentrisch bewegungsgekoppelt.

Die erste und die zweite Kurvenscheibe 24, 26 der ersten Getriebestufe 12 sind durch in den Figuren deutlich erkennbare Mitnehmerbolzen 30 gekoppelt. Hierzu weisen die Kurvenscheiben 24, 26 auf einer gedachten Kreisbahn angeordnete Bohrungen 32 mit einem Innendurchmesser auf, welcher größer ist als ein Außendurchmesser der Mitnehmerbolzen 30. Die Mitnehmerbolzen 30 der ersten Getriebestufe sind mit dem Getriebegehäuse 22 antriebsseitig, d.h. in Figur 1 links, mittels Schrauben 33 verschraubt und daher drehfest mit dem Getriebegehäuse 22 verbunden.

Die zweite Getriebestufe 14 weist ebenfalls eine erste Kurvenscheibe 34 und eine zweite Kurvenscheibe 36 auf, die in den Figuren 3 und 4 deutlich zu erkennen sind. Die Kurvenscheiben 34, 36 weisen zykloidische Kurvenabschnitte 38 der Anzahl n auf und sind an ihrem jeweiligen Außenumfang derart identisch ausgebildet, dass die Kurvenabschnitte 38 der ersten Kurvenscheibe 34 und der zweiten Kurvenscheibe 36 einander entsprechen. Die erste und die zweite Kurvenscheibe 34, 36 der zweiten Getriebestufe 14 sind mit der Abtriebswelle 20 exzentrisch bewegungsgekoppelt.

Die erste und die zweite Kurvenscheibe 34, 36 der zweiten Getriebestufe 14 sind durch in den Figuren ebenfalls deutlich erkennbare Mitnehmerbolzen 40 gekoppelt, wobei die Kurvenscheiben 34, 36 auf einer gedachten Kreisbahn angeordnete Bohrungen 42 mit einem Innendurchmesser aufweisen, welcher größer ist als ein Außendurchmesser der Mitnehmerbolzen 40. Die Mitnehmerbolzen 40 der zweiten Getriebestufe 14 sind mit der Abtriebswelle 20 drehfest verbunden. Zur drehfesten Verbindung und zur gleichmäßigen Lagerung der Abtriebswelle 20 im Getriebegehäuse 22 ist auf der der Abtriebswelle 20 abgewandten, antriebsseitigen Seite der Kurvenscheiben 34, 36 eine als Ring ausgebildete Abtriebsgegenwelle 43 vorgesehen, die konzentrisch zur Getriebeachse 16 angeordnet ist. Die Mitnehmerbolzen 40 sind mittels Schrauben 44 einerseits mit der antriebsseitigen Abtriebsgegenwelle 43 und andererseits mittels Schrauben 46 mit der abtriebsseitigen Abtriebswelle 20 verschraubt.

Es ist eine Zwischenwelle 48 vorgesehen, die koaxial zur Getriebeachse 16 und radial zwischen der ersten Getriebestufe 12 und der zweiten Getriebestufe 14 angeordnet ist. Die Zwischenwelle 48 weist dabei einen rohrförmigen Wellenabschnitt 50 und einen in etwa senkrecht dazu verlaufenden Flanschabschnitt 52 auf und umgreift die erste Getriebestufe 12 abtriebsseitig zumindest abschnittsweise.

Das Getriebegehäuse 22 sowie die Antriebswelle 18 weisen konzentrisch zur Getriebeachse 16 angeordnete Lagerabschnitte 54, 56 zur antriebsseitigen Lagerung der Antriebswelle 18 im Getriebegehäuse 22 auf. Ferner weisen die Zwischenwelle 48 und die Antriebswelle 18 konzentrisch zur Getriebeachse 16 angeordnete Lagerabschnitte 58, 60 zur abtriebsseitigen Lagerung der Antriebswelle 18 in der Zwischenwelle 48 auf.

Wie in den Figuren 3 und 4 deutlich erkennbar ist umfasst die erste Getriebestufe 12 einen ersten Bolzenring 62 mit einer Mehrzahl von auf einer gedachten Kreisbahn, die konzentrisch zur Getriebeachse 16 angeordnet ist, angeordneten Wälzbolzen 64 oder Bolzenabschnitten 64. Die Kurvenscheiben 24, 26 der ersten Getriebestufe 12 wälzen im ersten Bolzenring 62 ab.

Der erste Bolzenring 62 weist m+1 Wälzbolzen 64 oder Bolzenabschnitte 64 auf. Der erste Bolzenring 62 ist an der Zwischenwelle 48 angeordnet und ist mit der Zwischenwelle 48 drehgekoppelt. Dabei ist denkbar, dass die Bolzenabschnitte 64 mit der Zwischenwelle 48 einstückig verbunden sind. Ferner ist denkbar, dass die Wälzbolzen 64 an der Zwischenwelle 48 mittels geeigneter Wälzlager drehbar angeordnet sind, wobei der erste Bolzenring 62 insgesamt drehfest mit der Zwischenwelle 48 verbunden ist.

Der erste Bolzenring 62 ist mit der zweiten Getriebestufe 14 exzentrisch bewegungsgekoppelt. Zur exzentrischen Bewegungskopplung des Bolzenrings 62 mit der zweiten Getriebestufe 14 weist die Zwischenwelle 48 exzentrisch zur Getriebeachse 16 angeordnete Lagerabschnitte 66, 68 zur Lagerung der ersten und der zweiten Kurvenscheibe 34, 36 der zweiten Getriebestufe 14 auf.

Ferner umfasst die zweite Getriebestufe 14 einen zweiten Bolzenring 70 mit einer Mehrzahl von auf einer gedachten Kreisbahn, die konzentrisch zur Getriebeachse angeordnet ist, angeordneten Wälzbolzen 72. Die Kurvenscheiben 34, 36 der zweiten Getriebestufe 14 wälzen im zweiten Bolzenring 70 ab. Der zweite Bolzenring 70 weist n+1 Wälzbolzen 72 auf. Der zweite Bolzenring 70 ist im Getriebegehäuse 22 angeordnet, wobei die Wälzbolzen 72 im Getriebegehäuse 22 mittels geeigneter Wälzlager drehbar angeordnet sind, wobei der Bolzenring 70 insgesamt drehfest mit dem Getriebegehäuse 22 verbunden ist.

Zur exzentrischen Bewegungskopplung der Antriebswelle 18 und der ersten und zweiten Kurvenscheibe 24, 26 der ersten Getriebestufe 12 weist die Antriebswelle 18 exzentrisch zur Getriebeachse 16 angeordnete Lagerabschnitte 74, 76 zur Lagerung der ersten und der zweiten Kurvenscheibe 24, 26 der ersten Getriebestufe 12 auf.

Die Abtriebswelle 20 weist ferner einen ersten konzentrisch zur Getriebeachse 16 angeordneten Lagerabschnitt 78 auf, mittels dem die Abtriebswelle 20 in einem konzentrisch zur Getriebeachse 16 angeordneten Lagerabschnitt 80 des Getriebegehäuses 22 gelagert ist. Die Abtriebsgegenwelle 43 weist wiederum einen konzentrisch zur Getriebeachse 16 angeordneten Lagerabschnitt 82 auf, mittels dem die Abtriebsgegenwelle 43 in einem konzentrisch zur Getriebeachse 16 angeordneten Lagerabschnitt 84 des Getriebegehäuses 22 gelagert ist.

Zur exzentrischen Bewegungskopplung der ersten Getriebestufe 12 und der zweiten Getriebestufe 14, ist einerseits der erste Bolzenring 62 drehfest mit der Zwischenwelle 48 verbunden. Andererseits weist die Zwischenwelle 48 die exzentrisch zur Getriebeachse 16 angeordneten Lagerabschnitte 66, 68 auf, mittels derer die erste und die zweite Kurvenscheibe 34, 36 der zweiten Getriebestufe 14 exzentrisch zur Getriebeachse 16 gelagert sind.

Die Zwischenwelle 48 selbst ist einerseits antriebsseitig mittels eines konzentrisch zur Getriebeachse 16 angeordneten Lagerabschnitts 86 in einem konzentrisch zur Getriebeachse 16 angeordneten Lagerabschnitt 88 der Abtriebsgegenwelle 43 gelagert, wobei die Zwischenwelle 48 andererseits abtriebsseitig mittels eines konzentrisch zur Getriebeachse 16 angeordneten Lagerabschnitts 90 in einem konzentrisch zur Getriebeachse 16 angeordneten Lagerabschnitt 92 der Abtriebswelle 20 gelagert ist.

Die Lagerung der Antriebswelle 18, der Abtriebswelle 20, der Abtriebsgegenwelle 43, der Zwischenwelle 48, sowie der Kurvenscheiben 24, 26, 34, 36 erfolgt sämtlich durch an den entsprechenden Lagerabschnitten angeordnete Wälzlager 94, die bspw. als Kugel- oder Rollenlager ausgebildet sind.

Das erfindungsgemäße Zykloidgetriebe 10 funktioniert wie folgt:
Wenn die Antriebswelle 18 mittels eines geeigneten Antriebs, bpsw. mittels eines in den Figuren nicht gezeigten Elektromotors in Rotation in Richtung des Pfeils 96 versetzt wird, werden die Kurvenscheiben 24, 26 der ersten Getriebestufe 12 aufgrund der exzentrischen Bewegungskopplung und der exzentrischen Lagerung auf der Antriebswelle 18 in eine Taumelbewegung versetzt und wälzen über die Wälzbolzen 64 des ersten Bolzenrings 62 ab.

Da die Kurvenscheiben 24, 26 der ersten Getriebestufe 12 m Kurvenabschnitte 28 aufweisen und der Bolzenring 62 m+1 Wälzbolzen 64 aufweist, bewegen sich die Kurvenscheiben 24, 26 der ersten Getriebestufe 12 bei jeder vollen Umdrehung der Antriebswelle 18 um einen Kurvenabschnitt 28 im ersten Bolzenring 62 weiter.

Da die Mitnehmerbolzen 30 der ersten Getriebestufe 12 mit dem Getriebegehäuse 22 verschraubt sind, wird die Taumelbewegung der Kurvenscheiben 24, 26 in eine Rotationsbewegung der Zwischenwelle 48 in Richtung des Pfeils 98 umgesetzt. Die Drehrichtung der Zwischenwelle 48 entspricht dabei der Drehrichtung der Antriebswelle 18.

Auf diese Weise kann die Untersetzung der ersten Getriebestufe erreicht werden.

Aufgrund der exzentrischen Bewegungskopplung der Zwischenwelle 48 mit den Kurvenscheiben 34, 36 der zweiten Getriebestufe 14 führt die Rotation der Zwischenwelle 48 zu einer Taumelbewegung der Kurvenscheiben 34, 36, welche über die Wälzbolzen 72 des zweiten Bolzenrings 70 abwälzen.

Da die Kurvenscheiben 34, 36 der zweiten Getriebestufe 14 n Kurvenabschnitte 38 aufweisen und der zweite Bolzenring 70 n+1 Wälzbolzen 72 aufweist, bewegen sich die Kurvenscheiben 34, 36 der zweiten Getriebestufe 14 bei jeder vollen Umdrehung der Zwischenwelle 48 um einen Kurvenabschnitt 38 im zweiten Bolzenring 70 weiter.

Da die Mitnehmerbolzen 40 der zweiten Getriebestufe 14 mit der Abtriebswelle 20 und der Abtriebsgegenwelle 43 verschraubt sind und der zweite Bolzenring 70 mit dem Getriebegehäuse 22 drehfest verbunden ist, wird die Taumelbewegung der Kurvenscheiben 34, 36 der zweiten Getriebestufe 14 in eine Rotationsbewegung der Abtriebswelle 20 in Richtung des Pfeils 100 umgesetzt. Die Drehrichtung der Abtriebswelle 20 ist dabei entgegengesetzt zur der Drehrichtung der Antriebswelle 18.

Auf diese Weise kann eine weitere Untersetzung der zweiten Getriebestufe 14 bei entsprechend noch kleineren Drehzahlen erreicht werden.

Insgesamt kann mit dem erfindungsgemäßen Zykloidgetriebe 10 ein kompaktes und kostengünstiges Zykloidgetriebe 10 bereitgestellt werden, das große Untersetzungen bei großen übertragbaren Drehmomenten ermöglicht.

## Patentansprüche

1. Zykloidgetriebe (10) mit einer ersten Getriebestufe (12), die eine erste und eine zweite jeweils Kurvenabschnitte (28) aufweisende Kurvenscheibe (24, 26) aufweist, welche durch eine Mehrzahl von Mitnehmerbolzen (30) bewegungsgekoppelt sind, und mit einer um eine Getriebeachse (16) drehbar antreibbaren Antriebswelle (18) und wenigstens einer koaxial zur Getriebeachse (16) angeordneten Abtriebswelle (20), wobei die Antriebswelle (18) mit den Kurvenscheiben (24, 26) der ersten Getriebestufe (12) exzentrisch bewegungsgekoppelt ist und wobei eine zweite Getriebestufe (14) vorgesehen ist, die eine erste und eine zweite jeweils Kurvenabschnitte (38) aufweisende Kurvenscheibe (34, 36) aufweist, welche durch eine Mehrzahl von Mitnehmerbolzen (40) bewegungsgekoppelt sind, wobei eine Zwischenwelle (48) vorgesehen ist, auf der die Kurvenscheiben (34, 36) der zweiten Getriebestufe (14) exzentrisch gelagert sind, wobei ein mit der zweiten Getriebestufe (14) exzentrisch bewegungsgekoppelter erster Bolzenring (62) vorgesehen ist, in dem die Kurvenscheiben (24, 26) der ersten Getriebestufe (12) abwälzen und wobei die Kurvenscheiben (36) der zweiten Getriebestufe (14) mit der Abtriebswelle (20) exzentrisch bewegungsgekoppelt sind, wobei der erste Bolzenring (62) Bestandteil der ersten Getriebestufe (12) ist und an der Zwischenwelle (48) angeordnet ist,**dadurch gekennzeichnet, dass** die Zwischenwelle (48) koaxial zur Getriebeachse (16) radial zwischen der ersten Getriebestufe (12) und der zweiten Getriebestufe (14) angeordnet ist, wobei die Antriebswelle (18) das Zykloidgetriebe (10) axial durchsetzt und wobei die Zwischenwelle (48) mittels eines auf der Antriebswelle (18) angeordneten Wälzlagers (94) gelagert ist.

2. Zykloidgetriebe (10) nach Anspruch 1, **dadurch gekennzeichnet, dass** die Zwischenwelle (48) einen rohrförmigen Wellenabschnitt (50) und einen in etwa senkrecht dazu verlaufenden Flanschabschnitt (52) aufweist, so dass sie die erste Getriebestufe (12) zumindest abtriebsseitig abschnittsweise umgreift, wobei das Wälzlager (94) zwischen dem Flanschabschnitt (52) und der Antriebswelle (18) vorgesehen ist.

3. Zykloidgetriebe (10) nach wenigstens einem der vorherigen Ansprüche, **dadurch gekennzeichnet, dass** die Kurvenscheiben (24, 26) der ersten Getriebestufe (12) exzentrisch auf der Antriebswelle (18) gelagert sind.

4. Zykloidgetriebe (10) nach wenigstens einem der vorherigen Ansprüche, **dadurch gekennzeichnet, dass** das Zykloidgetriebe (10) ein Getriebegehäuse (22) aufweist.

5. Zykloidgetriebe (10) nach Anspruch 4, **dadurch gekennzeichnet, dass** die Mitnehmerbolzen (30) der ersten Getriebestufe mit dem Getriebegehäuse (22) verbunden sind.

6. Zykloidgetriebe (10) nach Anspruch 4 oder 5, **dadurch gekennzeichnet, dass** ein zweiter Bolzenring (70) vorgesehen ist, in dem die Kurvenscheiben (34, 36) der zweiten Getriebestufe abwälzen.

7. Zykloidgetriebe (10) nach wenigstens einem der vorherigen Ansprüche, **dadurch gekennzeichnet, dass** die Mitnehmerbolzen (40) der zweiten Getriebestufe (14) mit der Abtriebswelle (20) verbunden sind.

8. Zykloidgetriebe (10) nach wenigstens einem der vorherigen Ansprüche, **dadurch gekennzeichnet, dass** die Abtriebswelle (20) koaxial zur Getriebeachse (16) gelagert ist.

9. Zykloidgetriebe (10) nach wenigstens einem der vorherigen Ansprüche, **dadurch gekennzeichnet, dass** die Antriebswelle (18) als Hohlwelle ausgebildet ist.

10. Zykloidgetriebe (10) nach wenigstens einem der vorherigen Ansprüche, **dadurch gekennzeichnet, dass** die Abtriebswelle (20) radial außerhalb der Antriebswelle (18) angeordnet ist.

## Claims

1. Cycloid gear (10) comprising a first gear stage (12) which has a first and a second cam disc (24, 26) each having cam portions (28), which cam discs are movement-coupled by a plurality of driving pins (30), and comprising a drive shaft (18) which can be driven so as to rotate about a gear axis (16), and at least one output shaft (20) arranged coaxially with respect to the gear axis (16),
the drive shaft (18) being eccentrically movement-coupled to the cam discs (24, 26) of the first gear stage (12) and a second gear stage (14) being provided which has a first and a second cam disc (34, 36) each having cam portions (38), which cam discs are movement-coupled by a plurality of driving pins (40), an intermediate shaft (48) being provided on which the cam discs (34, 36) of the second gear stage (14) are eccentrically mounted, a first pin ring (62) that is eccentrically movement-coupled to the second gear stage (14) being provided, in which pin ring the cam discs (24, 26) of the first gear stage (12) roll and the cam discs (36) of the second gear stage (14) being eccentrically movement-coupled to the output shaft (20), the first pin ring (62) being part of the first gear stage (12) and being arranged on the intermediate shaft (48), **characterized in that** the intermediate shaft (48) is arranged coaxially with respect to the gear axis (16) radially between the first gear stage (12) and the second gear stage (14), the drive shaft (18) axially passing through the cycloid gear (10) and the intermediate shaft (48) being mounted by means of a rolling bearing (94) arranged on the drive shaft (18).

2. Cycloid gear (10) according to claim 1, **characterized in that** the intermediate shaft (48) has a tubular shaft portion (50) and a flange portion (52) extending approximately perpendicularly thereto such that the shaft surrounds the first gear stage (12) at least on the output side in portions, the rolling bearing (94) being provided between the flange portion (52) and the drive shaft (18).

3. Cycloid gear (10) according to at least one of the preceding claims, **characterized in that** the cam discs (24, 26) of the first gear stage (12) are eccentrically mounted on the drive shaft (18).

4. Cycloid gear (10) according to at least one of the preceding claims, **characterized in that** the cycloid gear (10) has a gear housing (22).

5. Cycloid gear (10) according to claim 4, **characterized in that** the driving pins (30) of the first gear stage are connected to the gear housing (22).

6. Cycloid gear (10) according to claim 4 or claim 5, **characterized in that** a second pin ring (70) is provided in which the cam discs (34, 36) of the second gear stage roll.

7. Cycloid gear (10) according to at least one of the preceding claims, **characterized in that** the driving pins (40) of the second gear stage (14) are connected to the output shaft (20).

8. Cycloid gear (10) according to at least one of the preceding claims, **characterized in that** the output shaft (20) is mounted coaxially with respect to the gear axis (16).

9. Cycloid gear (10) according to at least one of the preceding claims, **characterized in that** the drive shaft (18) is designed as a hollow shaft.

10. Cycloid gear (10) according to at least one of the preceding claims, **characterized in that** the output shaft (20) is arranged radially outside the drive shaft (18).

## Revendications

1. Transmission cycloïde (10) pourvue d'un premier étage de transmission (12), qui présente une première et une deuxième came (24, 26) présentant respectivement des parties courbes (28), lesquelles cames sont accouplées en mouvement par une pluralité de boulons d'entraînement (30), et d'un arbre d'entraînement (18) qui peut être entraîné en rotation autour d'un axe de transmission (16) et d'au moins un premier arbre de sortie (20) agencé de manière coaxiale par rapport à l'axe de transmission (16), dans laquelle l'arbre d'entraînement (18) est accouplé en mouvement de manière excentrée aux cames (24, 26) du premier étage de transmission (12) et dans laquelle un deuxième étage de transmission (14) est prévu, qui présente une première et une deuxième came (34, 36) présentant respectivement des parties courbes (38), lesquelles cames sont accouplées en mouvement par une pluralité de boulons d'entraînement (40), dans laquelle un arbre intermédiaire (48) est prévu, sur lequel les cames (34, 36) du deuxième étage de transmission (14) sont montées de manière excentrée, dans laquelle un premier anneau de boulon (62) accouplé en mouvement de manière excentrée au deuxième étage de transmission (14) est prévu, anneau dans lequel les cames (24, 26) du premier étage de transmission (12) roulent, et dans laquelle les cames (36) du deuxième étage de transmission (14) sont accouplées en mouvement de manière excentrée à l'arbre de sortie (20), dans laquelle le premier anneau de boulon (62) fait partie du premier étage de transmission (12) et est agencé sur l'arbre intermédiaire (48), **caractérisée en ce que** l'arbre intermédiaire (48) est agencé de manière coaxiale par rapport à l'axe de transmission (16) radialement entre le premier étage de transmission (12) et le deuxième étage de transmission (14), dans laquelle l'arbre d'entraînement (18) traverse axialement la transmission cycloïde (10) et dans laquelle l'arbre intermédiaire (48) est monté au moyen d'un palier à roulement (94) agencé sur l'arbre d'entraînement (18).

2. Transmission cycloïde (10) selon la revendication 1, **caractérisée en ce que** l'arbre intermédiaire (48) présente une partie tubulaire d'arbre (50) et une partie de bride (52) s'étendant à peu près perpendiculairement à celle-ci, de sorte qu'il entoure le premier étage de transmission (12) sur certaines parties au moins côté de sortie, dans laquelle le palier à roulement (94) est prévu entre la partie de bride (52) et l'arbre d'entraînement (18).

3. Transmission cycloïde (10) selon au moins l'une des revendications précédentes, **caractérisée en ce que** les cames (24, 26) du premier étage de transmission (12) sont montées sur l'arbre d'entraînement (18) de manière excentrée.

4. Transmission cycloïde (10) selon au moins l'une des revendications précédentes, **caractérisée en ce que** la transmission cycloïde (10) présente un carter de transmission (22).

5. Transmission cycloïde (10) selon la revendication 4, **caractérisée en ce que** les boulons d'entraînement (30) du premier étage de transmission sont reliés au carter de transmission (22).

6. Transmission cycloïde (10) selon la revendication 4 ou 5, **caractérisée en ce qu'**un deuxième anneau de boulon (70) est prévu, dans lequel les cames (34, 36) du deuxième étage de transmission roulent.

7. Transmission cycloïde (10) selon au moins l'une des revendications précédentes, **caractérisée en ce que** les boulons d'entraînement (40) du deuxième étage de transmission (14) sont reliés à l'arbre de sortie (20).

8. Transmission cycloïde (10) selon au moins l'une des revendications précédentes, **caractérisée en ce que** l'arbre de sortie (20) est monté de manière coaxiale par rapport à l'axe de transmission (16).

9. Transmission cycloïde (10) selon au moins l'une des revendications précédentes, **caractérisée en ce que** l'arbre d'entraînement (18) est réalisé sous la forme d'un arbre creux.

10. Transmission cycloïde (10) selon au moins l'une des revendications précédentes, **caractérisée en ce que** l'arbre de sortie (20) est agencé radialement à l'extérieur de l'arbre d'entraînement (18).
